# EUROPÄISCHE PATENTSCHRIFT

(11) **EP 2 490 308 B1**
(45) Veröffentlichungstag und Bekanntmachung des Hinweises auf die Patenterteilung: **26.04.2017**
(21) Anmeldenummer: 12154825.9
(22) Anmeldetag: 10.02.2012
(51) Int. Cl.: H02B 1/30, H02G 3/22

(54) **Elektrische Schaltanlage, insbesondere Mittelspannungsschaltanlage**
Electric switch assembly, in particular medium voltage medium voltage switching assembly
Installation de commutation électrique, notamment installation de commutation moyenne tension

(30) Priorität: 18.02.2011 DE 102011004426
(43) Veröffentlichungstag der Anmeldung: 22.08.2012
(73) Patentinhaber: Schneider Electric Sachsenwerk GmbH, 93055 Regensburg (DE)
(72) Erfinder: Zimmerer, Rudolf, 93192 Wald (DE); Osterrieter, Manuel, 81375 München (DE)
(74) Vertreter: DREISS Patentanwälte PartG mbB

(56) Entgegenhaltungen:
- DE-A1- 2 626 343
- DE-A1-102004 058 346
- DE-U1- 8 127 366
- DE-U1- 29 812 944
- US-A- 4 644 095

## Beschreibung

Die Erfindung betrifft eine Blechwand eines Schaltfelds einer elektrischen Schaltanlage sowie eine elektrische Schaltanlage.

Eine elektrische Schaltanlage, insbesondere eine Mittelspannungsschaltanlage, besteht üblicherweise aus einer Mehrzahl von Schaltfeldern. Dabei kann es sich um Einspeise-Schaltfelder handeln, über die elektrische Energie der elektrischen Schaltanlage zugeführt wird, oder um Abgangs-Schaltfelder, über die die eingespeiste elektrische Energie an elektrische Verbraucher verteilt wird.

Die Zuleitung zu den Schaltfeldern erfolgt üblicherweise über elektrische Kabel, die in Kanälen im Boden unterhalb der Schaltfelder verlegt sind. Die Kabel werden dann von unten den Schaltfeldern zugeführt.

Im Inneren sind die Schaltfelder üblicherweise in unterschiedliche Behälter oder Räume aufgeteilt, die durch Wände aus Blech voneinander getrennt sind. Zur Zuführung der Kabel in einen der Behälter oder in einen der Räume ist es erforderlich, dass die Kabel durch eine Blechwand hindurchgeführt werden. Beispielsweise müssen die Kabel von dem Kabelkanal durch eine Bodenplatte hindurch von unten in das Innere des jeweiligen Schaltfelds zugeführt werden. Hierzu sind üblicherweise Öffnungen in der Blechwand bzw. der Bodenplatte vorhanden.

Diese Öffnungen müssen in Abhängigkeit von der Anzahl der hindurchzuführenden Kabel sowie in Abhängigkeit von dem erwünschten Abstand der Kabel zueinander in die jeweilige Blechwand bzw. Bodenplatte eingearbeitet, beispielsweise ausgestanzt werden. Weiterhin muss die Blechwand bzw. die Bodenplatte entsprechend den Abmessungen des Schaltfelds ausgeschnitten werden. Die Blechwand bzw. die Bodenplatten muss also immer entsprechend dem jeweils vorhandenen Anwendungsfall individuell hergestellt werden. Dies ist mit Aufwand verbunden.

Derartige Bodenplatten für elektrische Schaltfelder sind aus der US 4 644 095 A, welche das Oberbegriff des Anspruchs 1 offenbart und der DE 298 12 944 U1 bekannt.

Aufgabe der Erfindung ist es, den Aufbau und/oder die Herstellung der Blechwand bzw. der Bodenplatte zu vereinfachen.

Die Erfindung löst diese Aufgabe durch eine Blechwand eines Schaltfelds einer elektrischen Schaltanlage nach dem Anspruch 1 sowie durch eine elektrische Schaltanlage nach dem Anspruch 10.

Die erfindungsgemäße Blechwand weist mindestens eine Öffnung zur Durchführung eines Kabels auf. Die Blechwand ist aus mindestens vier Blechen aufgebaut. Jedes der Bleche weist an einer Längsseite mindestens einen Einschnitt und in einem der Längsseite abgewandten Bereich eine Abdeckfläche auf. Zwei der Bleche stoßen entlang der Längsseite aneinander an. Die beiden Bleche sind derart zueinander ausgerichtet, dass sich die Einschnitte der beiden Bleche gegenüberstehen.

Bei der Erfindung ist die Blechwand aus mindestens vier Blechen aufgebaut, wobei zwei der Bleche einander mit ihren Abdeckflächen überlappen, und wobei die Ausdehnung der Blechwand mit Hilfe des Umfangs der Überlappung der beiden Bleche vorgebbar ist.

Mit Hilfe der Überlappung kann somit die Blechwand ohne einen weiteren Aufwand an die Abmessungen des jeweiligen Schaltfelds angepasst werden. Auf diese Weise kann die Blechwand ohne einen zusätzlichen Aufwand auch an die individuellen Abmessungen des jeweils vorhandenen Schaltfelds angepasst werden.

Bei einer Ausgestaltung der Erfindung weist das Blech an der Längsseite einen Falz auf. Vorzugsweise ist der Falz um etwa 180 Grad umgebogen. Mit Hilfe des Falzes wird erreicht, dass, wenn zwei Bleche überlappend angeordnet sind, die Bleche trotzdem im Wesentlichen eben beispielsweise auf einer Leiste oder dergleichen aufliegen.

Bei einer weiteren Ausgestaltung der Erfindung weist das Blech mindestens ein Langloch auf, das sich quer zur Längsseite des Blechs erstreckt. Mit Hilfe der Langlöcher können zwei überlappend angeordnete Bleche beispielsweise mit der vorgenannten Leiste verschraubt werden.

Bei einer Weiterbildung der Erfindung ist die Blechwand mit Hilfe von jeweils zwei weiteren, einander überlappenden Blechen erweiterbar. Die Blechwand kann also ohne einen besonderen Aufwand nur mittels der Hinzufügung weiterer erfindungsgemäßer Bleche an die erwünschte Anzahl von Öffnungen für durchzuführende Kabel angepasst werden.

Die Erfindung stellt somit insgesamt eine Blechwand zur Verfügung, die in flexibler Weise an ein Schaltfeld einer elektrischen Schaltanlage angepasst werden kann. Die Blechwand kann mit Hilfe weiterer Bleche modulartig erweitert werden. Auf diese Weise kann die Blechwand an die erwünschte Anzahl von Öffnungen angepasst werden. Weiterhin kann die Blechwand mittels der Überlappungen der Bleche an die Abmessungen des Schaltfelds angepasst werden.

Weitere Merkmale, Anwendungsmöglichkeiten und Vorteile der Erfindung ergeben sich aus der nachfolgenden Beschreibung von Ausführungsbeispielen der Erfindung, die in den Figuren dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Figuren.

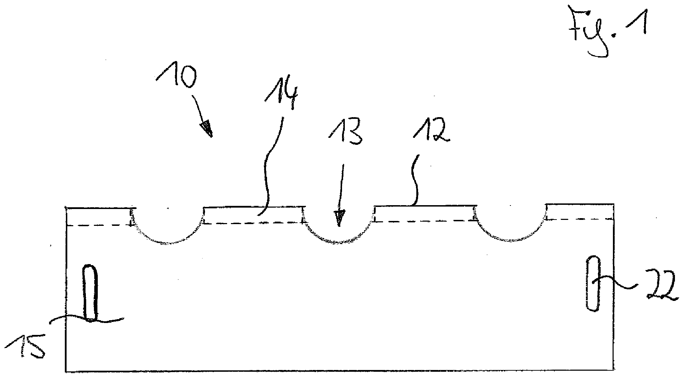

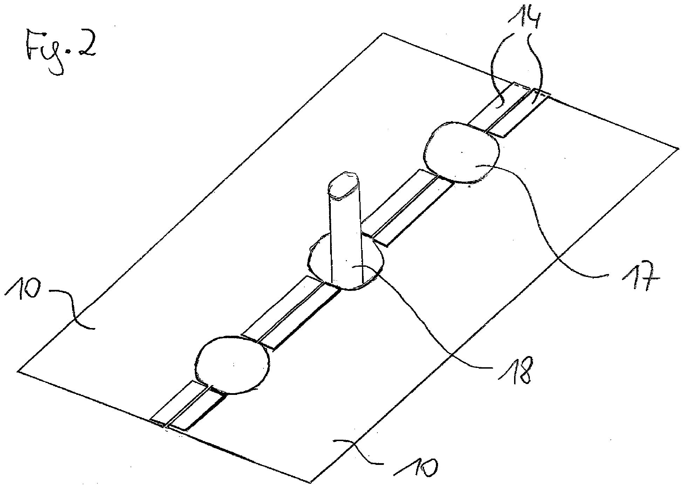

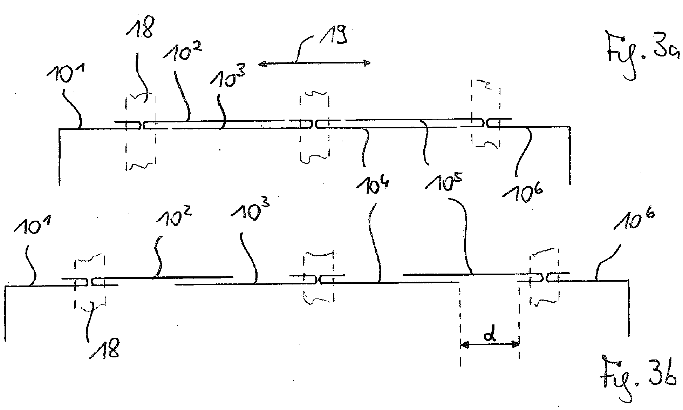

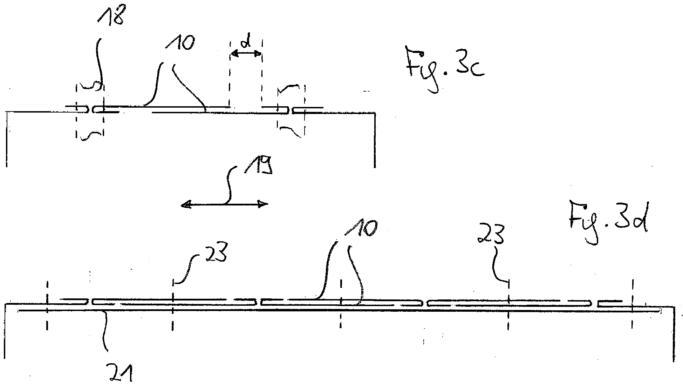

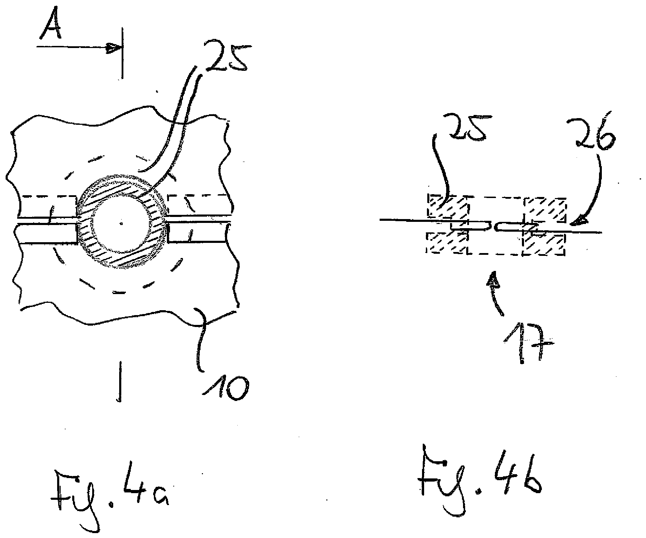

Die Figur 1 zeigt eine schematische Draufsicht auf ein Ausführungsbeispiel eines Blechs zur Bildung einer erfindungsgemäßen Blechwand eines elektrischen Schaltschranks, die Figur 2 zeigt eine schematische Perspektivansicht einer Möglichkeit zur Anordnung zweier Bleche der Figur 1 mit einem beispielhaft hindurchgeführten Kabel, die Figuren 3a, 3b, 3c, 3d zeigen schematische Seitenansichten von erfindungsgemäßen Blechwänden bestehend aus jeweils mindestens vier Blechen der Figur 1 mit unterschiedlichen Abständen zwischen den hindurchtretenden Kabeln sowie mit unterschiedlichen Anzahlen von Kabelreihen, und die Figuren 4a, 4b zeigen eine schematische Draufsicht und eine schematische Schnittdarstellung der beiden Bleche der Figur 2 mit einem Gummiring für das hindurchgeführte Kabel.

Eine elektrische Schaltanlage, insbesondere eine Mittelspannungsschaltanlage, besteht üblicherweise aus einer Mehrzahl von Schaltfeldern. Dabei kann es sich um Einspeise-Schaltfelder handeln, über die elektrische Energie der elektrischen Schaltanlage zugeführt wird, oder um Abgangs-Schaltfelder, über die die eingespeiste elektrische Energie an elektrische Verbraucher verteilt wird. Die Schaltfelder sind dabei über Sammelschienen elektrisch miteinander verbunden. In Abhängigkeit von ihrem Verwendungszweck sind in den einzelnen Schaltfeldern unterschiedliche elektrische Komponenten untergebracht, beispielsweise Leistungsschalter, Trenner/Erder-Schalter und dergleichen.

Die Zuleitung zu den Schaltfeldern erfolgt üblicherweise über elektrische Kabel, die in einem Kabelkanal im Boden unterhalb der Schaltfelder verlegt sind. Die Kabel werden von unten den Schaltfeldern zugeführt und gelangen innerhalb eines Schaltfelds dann zuerst in einen Kabelabgangsraum. Der Übergang von dem Kabelkanal zu dem Kabelabgangsraum des Schaltfelds wird dabei von einer etwa horizontal ausgerichteten Bodenplatte gebildet, in der Öffnungen enthalten sind, durch die die Kabel in etwa vertikaler Richtung hindurchgeführt sind.

In der Figur 1 ist ein Blech 10 dargestellt, mit dessen Hilfe insbesondere die vorgenannte Bodenplatte gebildet werden kann. Es versteht sich, dass das Blech 10 auch ganz allgemein dazu verwendet werden kann, irgendeine Blechwand innerhalb des Schaltfelds herzustellen.

Das Blech 10 ist rechteckförmig ausgebildet und weist an einer Längsseite 12 drei etwa halbkreisförmige Einschnitte 13 auf. Die Einschnitte 13 weisen etwa denselben Abstand zueinander auf und sind entlang der Längsseite 12 im Wesentlichen symmetrisch angeordnet. Es versteht sich, dass auch eine andere Anzahl von Einschnitten 13 vorgesehen sein kann.

Entlang der Längsseite 12 des Bleches 10 ist ein um etwa 180 Grad umgebogener Falz 14 vorhanden. In der Figur 1 ist dieser Falz 14 nach unten umgebogen und daher nur als gestrichelte Linie angedeutet. Die Breite des Falzes 14 quer zur Längsrichtung 12 kann auch größer oder kleiner sein als dies in der Figur 1 dargestellt ist. Im Bereich der Einschnitte 13 ist der Falz 14 ausgeschnitten, so dass der Falz 14 nicht in den Bereich der Einschnitte 13 hineinragt.

Der nicht zu dem Falz 14 zugehörige, großflächige Bereich des Bleches 10 wird nachfolgend als Abdeckfläche 15 bezeichnet.

In der Figur 2 sind zwei Bleche 10 dargestellt, die entlang der Längsseite 12 aneinander anstoßen. Beide Bleche 10 der Figur 2 stimmen identisch mit dem Blech 10 der Figur 1 überein. Die beiden Bleche 10 sind derart zueinander ausgerichtet, dass sich die jeweiligen Einschnitte 13 der beiden Bleche 10 gegenüberstehen. Dies hat zur Folge, dass von den Einschnitten 13 der beiden Bleche 10 drei etwa kreisförmige Öffnungen 17 gebildet werden. Diese drei Öffnungen 17 sind einer Kabelreihe zugeordnet. Durch eine dieser Öffnungen 17 ist beispielhaft ein elektrisches Kabel 18 hindurchgeführt.

Wie erläutert wurde, stoßen die beiden Bleche 10 an ihren Längsseiten 12 aneinander an. Damit verlaufen die beiden Falze 14 der beiden Bleche 10 im Wesentlichen parallel zueinander und die freien Enden der beiden Falze 14 zeigen in entgegengesetzte Richtungen. Wie der Figur 2 zu entnehmen ist, sind die beiden Falze 14 der beiden Bleche 10 jeweils nach oben umgebogen sind. Die beiden Bleche 10 sind also derart angeordnet, dass die beiden benachbart verlaufenden Falze 14 in dieselbe Richtung umgebogen sind.

Es versteht sich, dass eines der beiden Bleche 10 der Figur 2 auch "umgedreht" angeordnet sein kann, so dass die beiden Falze 14 der beiden Bleche 10 in unterschiedliche Richtungen umgebogen sind.

In der Figur 3a sind insgesamt sechs Bleche 10 vorhanden, die zusammen eine Bodenplatte für ein Schaltfeld bilden. Abgesehen von den beiden Randblechen stimmt jedes der sechs Bleche 10 der Figur 3a stimmt mit dem Blech 10 der Figur 1 überein. Die sechs Bleche 10 sind nebeneinander in einer im Wesentlichen etwa horizontalen Ebene angeordnet. Die vier zwischen den beiden Randblechen vorhandenen Bleche 10 sind im Vergleich zueinander "umgedreht" und dadurch überlappend angeordnet.

Die sechs Bleche 10 stellen drei Kabelreihen mit jeweils drei Öffnungen 17 zur Verfügung. In jeder der drei Kabelreihen ist beispielhaft ein einzelnes, durch eine der Öffnungen 17 hindurchgeführtes Kabel 18 angedeutet.

In der Figur 3a sind die einzelnen Bleche 10 durch aufeinanderfolgende, hochgestellte Zahlen voneinander unterschieden. Weiterhin ist die Ausdehnung der Bleche 10 in Richtung der von ihnen gebildeten, etwa horizontalen Ebene mit einem Doppelpfeil 19 gekennzeichnet.

Das Blech 10¹ ist ein Randblech und ist deshalb um etwa 90 Grad umgebogen. Mit dem umgebogenen Bereich kann das Blech 10¹ beispielsweise an einer vertikalen Gehäusewand des zugehörigen Schaltfelds befestigt werden. Es versteht sich, dass das Blech 10¹ auch nach oben umgebogen sein kann. Bei dem Blech 10¹ ist der Falz 14 nach oben umgebogen, so dass die Abdeckfläche 15 des Bleches 10¹ unterhalb des Falzes 14 angeordnet ist.

An den Falz 14 des Bleches 10¹ stößt der Falz 14 des Bleches 10² an. Der Falz 14 der Bleches 10² ist nach unten umgebogen. Der Falz 14 des Bleches 10¹ und die Abdeckfläche 15 des Bleches 10² sind im Wesentlichen in einer gemeinsamen Ebene angeordnet.
Das Blech 10³ ist überlappend zu dem Blech 10² angeordnet. Zu diesem Zweck ist die Abdeckfläche 15 des Bleches 10³ unterhalb der Abdeckfläche 15 des Bleches 10² angeordnet und der Falz 14 des Bleches 10³ ist nach oben umgebogen und weist damit in die entgegengesetzte Richtung im Vergleich zu dem Falz 14 des Bleches 10². Die Abdeckfläche 15 des Bleches 10² und der Falz 14 des Bleches 10³ sind im Wesentlichen in einer gemeinsamen Ebene angeordnet. Entsprechendes gilt für den Falz 14 des Bleches 10² und die Abdeckfläche 15 des Bleches 10³.

An den Falz 14 des Bleches 10³ stößt der Falz 14 des Bleches 10⁴ an. Der Falz 14 des Bleches 10⁴ ist wie der Falz 14 des Bleches 10³ nach oben umgebogen. Die Abdeckfläche 15 des Bleches 10⁴ und die Abdeckfläche 15 des Bleches 10³ sind im Wesentlichen in einer gemeinsamen Ebene angeordnet. Entsprechendes gilt für den Falz 14 des Bleches 10⁴ und den Falz 14 des Bleches 10³.

Das Blech 10⁵ ist überlappend zu dem Blech 10⁴ angeordnet. Zu diesem Zweck ist die Abdeckfläche 15 des Bleches 10⁴ unterhalb der Abdeckfläche 15 des Bleches 10⁵ angeordnet und der Falz 14 des Bleches 10⁵ ist nach unten umgebogen und weist damit in die entgegengesetzte Richtung im Vergleich zu dem Falz 14 des Bleches 10⁴. Die Abdeckfläche 15 des Bleches 10⁵ und der Falz 14 des Bleches 10⁴ sind im Wesentlichen in einer gemeinsamen Ebene angeordnet. Entsprechendes gilt für den Falz 14 des Bleches 10⁵ und die Abdeckfläche 15 des Bleches 10⁴.

Der Falz 14 des Bleches 10⁵ steht dem Falz 14 des Bleches 10⁶ gegenüber. Das Blech 10⁶ stellt ein Randblech dar und ist in entsprechender Weise ausgebildet und angeordnet wie das Blech 10¹.

Die überlappenden Bleche 10², 10³ und die überlappenden Bleche 10⁴, 10⁵ sind derart zueinander angeordnet, dass sie jeweils vollständig überlappen. Dies bedeutet, dass der Falz 14 und die Abdeckfläche 15 der jeweils überlappenden Bleche 10², 10³, 10⁴, 10⁵ nahezu aneinander anstoßen, also im Wesentlichen keinen Abstand zueinander aufweisen. Dies hat zur Folge, dass die Gesamtheit der sechs Bleche 10¹, 10², 10³, 10⁴, 10⁵, 10⁶ in Richtung des Doppelpfeils 19 eine minimale Ausdehnung aufweist.

In der Figur 3b sind dieselben sechs Bleche 10¹, 10², 10³, 10⁴, 10⁵, 10⁶ dargestellt wie in der Figur 3a. Die Bleche 10¹, 10², 10³, 10⁴, 10⁵, 10⁶ bilden zusammen eine Bodenplatte für ein Schaltfeld. Die Bleche 10¹, 10², 10³, 10⁴, 10⁵, 10⁶ sind identisch ausgebildet und grundsätzlich auch in gleicher Weise angeordnet wie in der Figur 3a und wie vorstehend erläutert.

Im Unterschied zu der Figur 3a sind in der Figur 3b die überlappenden Bleche 10², 10³ und die überlappenden Bleche 10⁴, 10⁵ derart zueinander angeordnet, dass sie jeweils nicht vollständig überlappen. Dies bedeutet, dass der Falz 14 und die Abdeckfläche 15 der jeweils überlappenden Bleche 10², 10³, 10⁴, 10⁵ nicht aneinander anstoßen, sondern einen Abstand d zueinander aufweisen. Der Abstand d kann dabei nahezu beliebig eingestellt werden. Aufgrund des Abstands d weist die Gesamtheit der sechs Bleche 10¹, 10², 10³, 10⁴, 10⁵, 10⁶ der Figur 3b in Richtung des Doppelpfeils 19 eine größere Ausdehnung auf als die sechs Bleche 10¹, 10², 10³, 10⁴, 10⁵, 10⁶ der Figur 3a.

Wie aus den Figuren 3a, 3b hervorgeht, hängt die Ausdehnung der Bleche 10 in Richtung des Pfeils 19 von dem Abstand d und damit von dem Umfang der erläuterten Überlappung ab. Je geringer die Überlappung der Bleche 10 ist, desto größer ist der Abstand d und damit die Ausdehnung der Bleche 10 in Richtung des Pfeils 19.

Wie erläutert wurde, sind in den Figuren 3a, 3b insgesamt sechs Bleche vorhanden, die zusammen eine Bodenplatte bilden, und die die Durchführung von drei Kabelreihen mit jeweils drei Kabeln 18 ermöglichen.

In der Figur 3c ist sind vier Bleche 10 dargestellt, die identisch ausgebildet und grundsätzlich auch in gleicher Weise angeordnet sind wie in den Figuren 3a, 3b. Die vier Bleche 10 bilden eine Bodenplatte für ein Schaltfeld. Durch die vier Bleche 10 werden zwei Kabelreihen mit jeweils drei Öffnungen 17 zur Verfügung gestellt. Durch diese Öffnungen 17 können die Kabel 18 hindurchgeführt werden.

In der Figur 3c ist die Überlappung der Bleche 10 beispielhaft derart vorgesehen, dass der resultierende Abstand d bei der Figur 3c kleiner ist als bei der Figur 3b.

In der Figur 3d ist sind acht Bleche 10 dargestellt, die identisch ausgebildet und grundsätzlich auch in gleicher Weise angeordnet sind wie in den Figuren 3a, 3b. Die acht Bleche 10 bilden eine Bodenplatte für ein Schaltfeld. Durch die acht Bleche 10 werden vier Kabelreihen mit jeweils drei Öffnungen 17 zur Verfügung gestellt. Durch diese Öffnungen 17 können die Kabel 18 hindurchgeführt werden.

Wie insbesondere aus den Figuren 3c, 3d hervorgeht, kann die Anzahl der von den Blechen 10 gebildeten Kabelreihen verändert werden. Für eine weitere Kabelreihe sind dabei immer zwei weitere, einander überlappende Bleche 10 erforderlich.

Es kann somit einerseits die Ausdehnung der Bleche 10 und damit der Bodenplatte des Schaltfelds in Richtung des Pfeils 19 durch eine entsprechende Veränderung der Überlappung der Bleche 10 eingestellt werden. Andererseits kann die Anzahl der Kabelreihen der Bodenplatte durch eine entsprechende Anzahl von Blechen 10 eingestellt werden. Damit kann die aus den Blechen 10 gebildete Bodenplatte an die Abmessungen und die Anzahl der Kabel des jeweiligen Schaltfelds angepasst werden.

In der Figur 3d ist eine Leiste 21 schematisch dargestellt, die sich unterhalb der Bleche 10 in Richtung des Pfeils 19 erstreckt. Die Leiste 21 kann beispielsweise an einer vertikalen Gehäusewand des zugehörigen Schaltfelds befestigt sein. Eine entsprechende Leiste kann auch an der gegenüberliegenden Gehäusewand befestigt sein.

Die Bleche 10 liegen entweder mit ihren Abdeckflächen 15 oder mit ihren Falzen 14 auf der/den Leisten 21 auf. Aufgrund der gleichartigen Ausbildung der Bleche 10 sowie aufgrund der beschriebenen Anordnung der Bleche 10 liegen alle Bleche 10 im Wesentlichen eben und ganzflächig auf der/den Leiste/n 21 auf.

Wie beispielhaft in der Figur 1 dargestellt ist, können die Bleche 10 mit Langlöchern 22 versehen sein, die sich quer zur Längsseite 12 der Bleche 10 erstrecken. Die Langlöcher 22 sind dabei derart ausgebildet und angeordnet und die Überlappung der beiden Bleche 10 ist derart vorgesehen, dass bei zwei sich überlappenden Blechen 10 immer eine Schraube durch die Langlöcher 22 der beiden Bleche 10 hindurch gesteckt werden kann.

In der/den Leiste/n 21 können entsprechend zugeordnete Bohrungen vorhanden sein, durch die die Schrauben ebenfalls hindurch gesteckt werden können. Damit ist es möglich, die Bleche 10 mit der/den Leiste/n 21 zu verschrauben. In der Figur 3d sind diese Verschraubungen schematisch mit Hilfe von gestrichelten Linien 23 dargestellt, die die einzelnen Schrauben darstellen sollen.

In den Figuren 4a, 4b ist der Bereich der von zwei aneinander anstoßenden Bleche 10 gebildeten Öffnung 17 dargestellt. Die Figur 4b ist dabei eine Schnittdarstellung entlang der Ebene A der Figur 4a. In die Öffnung 17 ist ein Gummiring 25 aufgenommen. Es versteht sich, dass es sich bei dem Gummiring 25 auch um einen aus Kunststoff oder einem vergleichbaren Material hergestellten Ring handeln kann.

Der Gummiring 25 weist einen etwa C-förmigen Querschnitt auf, wobei am äußeren Umfang ein Rücksprung 26 für die etwa halbkreisförmigen Einschnitte 13 der beiden Bleche 10 vorhanden ist. Der Gummiring 25 liegt im Wesentlichen eben auf den Abdeckflächen 15 und den Falzen 14 der beiden Bleche 10 auf. Bei der Montage der Bleche 10 innerhalb des Schaltfelds kann der Gummiring 25 in die jeweiligen Einschnitte 13 der beiden Bleche 10 eingeführt werden. Danach kann das entsprechende Kabel 18 durch den Gummiring 25 und damit durch die Öffnung 17 hindurch gesteckt werden.

## Patentansprüche

1. Blechwand, insbesondere Bodenplatte, eines Schaltfelds einer elektrischen Schaltanlage, insbesondere einer Mittelspannungsschaltanlage, wobei die Blechwand mindestens eine Öffnung (17) zur Durchführung eines Kabels (18) aufweist, wobei die Blechwand aus Blechen (10) aufgebaut ist, wobei jedes Blech (10) an einer Längsseite (12) mindestens einen Einschnitt (13) und in einem der Längsseite (12) abgewandten Bereich eine Abdeckfläche (15) aufweist, wobei zwei der Bleche (10) entlang der Längsseite (12) aneinander anstoßen, und wobei sich die Einschnitte (13) der beiden Bleche (10) gegenüberstehen, **dadurch gekennzeichnet, dass** die Blechwand aus mindestens vier Blechen (10) aufgebaut ist, dass zwei der Bleche (10) einander mit ihren Abdeckflächen (15) überlappen, und dass die Ausdehnung der Blechwand von der Überlappung der beiden Bleche (10) abhängig ist.

2. Blechwand nach Anspruch 1, wobei jedes der Bleche (10) an der Längsseite (12) einen Falz (14) aufweist.

3. Blechwand nach Anspruch 2, wobei der Falz (14) um etwa 180 Grad umgebogen ist.

4. Blechwand nach einem der vorstehenden Ansprüche, wobei jedes der Bleche (10) etwa rechteckförmig ausgebildet ist.

5. Blechwand nach einem der vorstehenden Ansprüche, wobei der Einschnitt (13) des Blechs (10) etwa halbkreisförmig ausgebildet ist.

6. Blechwand nach einem der vorstehenden Ansprüche, wobei jedes der Bleche (10) drei Einschnitte (13) aufweist.

7. Blechwand nach Anspruch 6, wobei die Abstände der Einschnitte (13) etwa gleich groß sind.

8. Blechwand nach einem der vorstehenden Ansprüche, wobei jedes der Bleche (10) mindestens ein Langloch (22) aufweist, das sich quer zur Längsseite (12) des Blechs (10) erstreckt.

9. Blechwand nach einem der vorstehenden Ansprüche, wobei die Blechwand mit Hilfe von jeweils zwei weiteren, einander überlappenden Blechen (10) erweiterbar ist.

10. Elektrische Schaltanlage, insbesondere Mittelspannungsschaltanlage, mit einem Schaltfeld, das eine Blechwand, insbesondere eine Bodenplatte, nach einem der vorstehenden Ansprüche aufweist.

## Claims

1. Metal wall, especially a base plate, of a switch panel of an electrical switchboard, especially of a medium voltage electrical switchboard, wherein the metal wall comprises at least one opening (17) for passing a cable (18), wherein the metal wall is assembled from metal sheets (10), wherein each metal sheet (10) comprises at least one cut-out (13) on a long side (12) and a covering area (15) in a region facing away from the long side (12), wherein two of the metal sheets (10) abut against each other, and wherein the cut-outs (13) of both of the metal sheets (10) face each other, **characterized in that** the metal wall is assembled of at least four metal sheets (10), that two of the metal sheets (10) overlap each other with its covering areas (15), and that the dimension of the metal wall depends on the overlap of both of the metal sheets (10).

2. Metal wall according to claim 1, wherein each of the metal sheets (10) comprises a fold (14).

3. Metal wall according to claim 2, wherein the fold (14) is bend by about 180°.

4. Metal wall according to one of the preceding claims, wherein each of the metal sheets (10) is formed approximately rectangle-like.

5. Metal wall according to one of the preceding claims, wherein the cut-out (13) of the metal sheet (10) is formed approximately semicircle-like.

6. Metal wall according to one of the preceding claims, wherein each of the metal sheets (10) comprises three cut-outs (13).

7. Metal wall according to claim 6, wherein the distances of the cut-outs (13) are nearly equal.

8. Metal wall according to one of the preceding claims, wherein each of the metal sheets (10) comprises a slot hole, which extends transverse to the long side (12) of the metal sheet (10).

9. Metal wall according to one of the preceding claims, wherein the metal wall is extendable by means of two further overlapping metal sheets (10).

10. Electrical Switchboard, especially a medium voltage electrical switchboard, with a switch panel, which comprises a metal wall, especially a base plate, according to one of the proceeding claims.

## Revendications

1. Paroi en tôle, en particulier plaque de fond, d'un panneau de couplage d'un appareillage électrique, en particulier d'un appareillage électrique à moyenne tension, dans laquelle ladite paroi en tôle comprend au moins une ouverture (17) pour faire passer un câble (18), dans laquelle la paroi en tôle est réalisée à partir de tôles (10), chaque tôle (10) présentant au moins une incision (13) sur un grand côté (12) et une surface de recouvrement (15) dans une zone montrant dans la direction opposée au grand côté (12), dans laquelle deux des tôles (10) sont contiguës le long du grand côté (12), et dans laquelle les incisions (13) des deux tôles (10) se font face, **caractérisée par le fait que** la paroi en tôle est réalisée à partir d'au moins quatre tôles (10), que deux des tôles (10) chevauchent l'une sur l'autre par leurs surfaces de recouvrement (15) et que l'extension de la paroi en tôle est fonction du chevauchement des deux tôles (10).

2. Paroi en tôle selon la revendication 1, dans laquelle chacune des tôles (10) présente une agrafe (14) sur le grand côté (12).

3. Paroi en tôle selon la revendication 2, dans laquelle ladite agrafe (14) est recourbée de 180 degrés à peu près.

4. Paroi en tôle selon l'une quelconque des revendications précédentes, dans laquelle chacune des tôles (10) est réalisée à peu près en rectangle.

5. Paroi en tôle selon l'une quelconque des revendications précédentes, dans laquelle l'incision (13) de la tôle (10) est réalisée à peu près en demi-cercle.

6. Paroi en tôle selon l'une quelconque des revendications précédentes, dans laquelle chacune des tôles (10) présente trois incisions (13).

7. Paroi en tôle selon la revendication 6, dans laquelle les distances séparant les incisions (13) sont à peu près égales.

8. Paroi en tôle selon l'une quelconque des revendications précédentes, dans laquelle chacune des tôles (10) présente au moins un trou oblong (22) qui s'étend transversalement au grand côté (12) de la tôle (10).

9. Paroi en tôle selon l'une quelconque des revendications précédentes, dans laquelle la paroi en tôle peut être élargie à l'aide de respectivement deux autres tôles (10) qui chevauchent l'une sur l'autre.

10. Appareillage électrique, en particulier appareillage électrique à moyenne tension, comprenant un panneau de couplage qui présente une paroi en tôle, en particulier une plaque de fond, selon l'une quelconque des revendications précédentes.
